(19) Europäisches Patentamt
European Patent Office
Office européen des brevets

(11) **EP 0 980 565 B1**

(12) **EUROPÄISCHE PATENTSCHRIFT**

| | |
|---|---|
| (45) Veröffentlichungstag und Bekanntmachung des Hinweises auf die Patenterteilung: **25.07.2001 Patentblatt 2001/30** | (51) Int Cl.[7]: **G06K 9/66**, G07C 9/00 |
| (21) Anmeldenummer: **98931915.7** | (86) Internationale Anmeldenummer: **PCT/DE98/01051** |
| (22) Anmeldetag: **14.04.1998** | (87) Internationale Veröffentlichungsnummer: **WO 98/50880 (12.11.1998 Gazette 1998/45)** |

(54) **VERFAHREN ZUR ANPASSUNG EINES REFERENZDATENSATZES ANHAND MINDESTENS EINES EINGABEDATENSATZES DURCH EINEN RECHNER**

COMPUTER-CONTROLLED ADAPTATION OF REFERENCE DATA BY MEANS OF INPUT DATA

PROCEDE D'ADAPTATION PAR ORDINATEUR D'UN JEU DE DONNEES DE REFERENCE A L'AIDE D'UN JEU DE DONNEES D'ENTREE

(84) Benannte Vertragsstaaten:
**AT DE FR GB**

(30) Priorität: **07.05.1997 DE 19719469**

(43) Veröffentlichungstag der Anmeldung:
**23.02.2000 Patentblatt 2000/08**

(73) Patentinhaber: **SIEMENS AKTIENGESELLSCHAFT 80333 München (DE)**

(72) Erfinder: **WIRTZ, Brigitte D-83607 Holzkirchen (DE)**

(56) Entgegenhaltungen:
GB-A- 2 104 698     US-A- 4 724 542
US-A- 5 052 043

- ANTHONY N J ET AL: "SUPERVISED ADAPTATION FOR SIGNATURE VERIFICATION SYSTEM" IBM TECHNICAL DISCLOSURE BULLETIN, Bd. 21, Nr. 1, Juni 1978, Seite 424/425 XP002060376

**Beschreibung**

Die Erfindung betrifft ein Verfahren zur Anpassung eines Referenzdatensatzes anhand mindestens eines Eingabedatensatzes durch einen Rechner.

Bekannte Verfahren zur Verifikation des Teilnehmers, z.B. durch Eingabe eines Paßworts oder mittels einer Chipkarte, beruhen darauf, daß der Teilnehmer über nur ihm bekanntes Wissen verfügt (Paßwort) oder nur er das entsprechende Medium für die Gewährung des Zugangs (Chipkarte) besitzt.

Alternativ dazu bedient sich die Biometrie einer physiologischen oder einer verhaltenstypischen Eigentümlichkeit des Teilnehmers bei der automatischen Identitätsverifikation oder generell zur Authentifikation.

Physiologische Verfahren bedienen sich dabei menschlicher Eigentümlichkeit, die sich im Normalfall nicht oder nur wenig ändert. Entsprechende Merkmale weisen die Vorteile auf, daß sie nicht gestohlen und nur mit großer Mühe kopiert werden können.

Eine Unterschriftsverifikation ist ein biometrisches Verfahren. Dabei wird eine in einen Rechner eingegebene Unterschrift verarbeitet, unabhängig vom Textinhalt, mit dem Ziel, die Authentizität des Schreibers entweder zu bestätigen oder zu verneinen.

Aus [1] ist bekannt, eine Unterschrift mittels eines elektromagnetischen Tabletts in elektronischer Form zu erhalten. Eine derartige (elektronische) Unterschrift umfaßt mehrere Kenngrößen, z.B. Koordinateninformation, Druck und Geschwindigkeit jeweils zu diskreten Abtastzeitpunkten.

Eine Verifikation eines Eingabedatensatzes beruht auf einem Vergleich mit einem Referenzdatensatz. Im Fall einer Unterschriftsverifikation handelt es sich bei dem Referenzdatensatz um eine elektronische Unterschrift, im weiteren als "Referenzunterschrift" bezeichnet; der Eingabedatensatz ist eine aktuell angeforderte, beispielsweise mittels eines elektronischen Tabletts eingegebene Unterschrift.

Es ist allgemein bekannt, daß von Hand geschriebene Unterschriften derselben Person einander nicht exakt gleichen. Außerdem können sich wesentliche Merkmale der Unterschrift einer Person mit der Zeit ändern.

Aus [2] ist ein Verfahren zur Referenzdatenadaption bekannt. Allerdings ist dabei eine Gefahr der Fälscheradaption hoch.

Die Aufgabe der Erfindung besteht darin, Referenzdaten, die über die Zeit einer Veränderung unterliegen, automatisch dieser Veränderung anzupassen ohne dabei einer Fälscheradaption zu unterliegen.

Diese Aufgabe wird gemäß den Merkmalen des Patentanspruchs 1 gelöst.

Die Erfindung gibt ein Verfahren zur Anpassung eines Referenzdatensatzes anhand mindestens eines Eingabedatensatzes durch einen Rechner an. Dazu wird zunächst für den mindestens einen Eingabedatensatz ein Bewertungsmaß bestimmt, das eine Übereinstimmung mit dem einen Referenzdatensatz kennzeichnet. Wenn das Bewertungsmaß innerhalb eines vorgegebenen ersten Bereichs liegt, wird der Eingabedatensatz in einen Pufferspeicher eingetragen und ein neuer Referenzdatensatz ermittelt. Liegt das Bewertungsmaß innerhalb eines vorgegebenen zweiten Bereichs, so wird ein nächster Referenzdatensatz aus den Datensätzen des Pufferspeichers ermittelt. Ist der nächste Referenzdatensatz "besser" als der (alte) Referenzdatensatz, so wird der nächste Referenzdatensatz anstelle des (alten) Referenzdatensatzes verwendet. Ist der nächste Referenzdatensatz hingegen "schlechter" als der (alte) Referenzdatensatz, so wird der nächste Referenzdatensatz verworfen. Liegt das Bewertungsmaß innerhalb eines dritten Bereichs, so bleibt der Referenzdatensatz unverändert bestehen.

Dabei ist ein erster Datensatz "besser" als ein zweiter Datensatz, wenn ein durch ein Bewertungsmaß definierter Abstand des ersten Datensatzes zu dem Referenzdatensatz kürzer (also besser mit dem Referenzdatensatz übereinstimmt) als der Abstand von dem zweiten Datensatz zu dem Referenzdatensatz ist. Analog dazu ist dann der zweite Datensatz "schlechter" als der erste Datensatz.

Vorzugsweise wird der Referenzdatensatz bestimmt, indem vorgebbare Kenngrößen einer vorgebbaren Anzahl an Datensätzen gemittelt werden. Dabei gibt es, wie aus [1] bekannt ist, zu jedem Abtastzeitpunkt einen Datensatz (Vektor), der die Kenngrößen für diesen Abtastzeitpunkt enthält. Unter Berücksichtigung aller oder eines Teils dieser Kenngrößen wird ein Referenzdatensatz durch Mittelung der Werte ermittelt.

Dazu alternativ kann der Referenzdatensatz aus einer Menge von Originaldatensätzen, also Datensätzen, bei denen sichergestellt ist, daß sie vom autorisierten Teilnehmer stammen, ausgewählt werden, der in dem durch die Kenngrößen bestimmten Merkmalsraum die beste Beschreibung der Originaldatensätze darstellt.

Diese beiden Möglichkeiten sind ohne Einschränkung lediglich zwei Alternativen zur Referenzdatensatzbestimmung. Es sind vielerlei andere Möglichkeiten denkbar, die in der Erfindung ebenso Verwendung finden können.

Eine Weiterbildung des Pufferspeichers ist ein Ringpuffer, der eine vorgebbare Anzahl an Datensätzen enthält. Ein Ringpuffer zeichnet sich dadurch aus, daß darin der älteste Datensatz gelöscht wird, sobald ein neuer Datensatz hinzugefügt wird. Dies gilt natürlich unter der Voraussetzung, daß der Ringpuffer voll ist, da ansonsten der neue Datensatz einfach hinzugefügt wird.

Eine nächste Weiterbildung der Erfindung besteht darin, den Eingabedatensatz als einen Originaldatensatz zu verifizieren, falls das Bewertungsmaß innerhalb des ersten Bereichs oder des zweiten Bereichs liegt. Liegt das Bewertungsmaß für den Eingabedatensatz außerhalb des ersten oder des zweiten Bereichs, so ist eine Verifikation des Eingabedatensatzes zu verneinen; der Eingabedatensatz wird als eine Fälschung betrachtet.

Eine andere Weiterbildung besteht darin, daß Originaldatensätze gemäß einer Wahrscheinlichkeitsverteilung beschrieben werden. Eine derartige Wahrscheinlichkeitsverteilung kann eine Normalverteilung mit einem Erwartungswert und einer Standardabweichung sein.

Ferner ist im Rahmen einer zusätzlichen Weiterbildung der Referenzdatensatz durch den Erwartungswert der Originaldatensätze bestimmt.

Schließlich kann eine Unterteilung der einzelnen Bereiche durch folgende Notation bestimmt sein:

Erster Bereich:

$$BEW \in [0; \mu + \alpha_1 \cdot \sigma],$$

Zweiter Bereich:

$$BEW \in [\mu + \alpha_1 \cdot \sigma; \mu + \alpha_2 \cdot \sigma],$$

Dritter Bereich:

$$BEW \in [\mu + \alpha_2 \cdot \sigma; \infty],$$

wobei

BEW  das Bewertungsmaß,
$\mu$     den Erwartungswert,
$\sigma$     die Standardabweichung,
$\alpha_1$    einen vorgebbarer Parameter, mit dem eine obere Schranke des ersten Bereichs bestimmt wird,
$\alpha_2$    einen vorgebbaren Parameter, mit dem eine obere Schranke des zweiten Bereichs bestimmt wird,

bezeichnen.

Auch ist es möglich zusätzlich den Wertebereich des Berwertungsmaßes in einen vierten Bereich zu unterteilen, der zwischen dem zweiten und dem dritten Bereich liegt und mittels vorgebbarer Schwellen bestimmt ist. In diesem Bereich können Originaldatensätze liegen, die als solche erkannt werden, ohne daß der Referenzdatensatz verändert wird.

Im Rahmen einer Anwendung der Erfindung kann es sich bei den erwähnten Datensätzen um Unterschriften handeln, die elektronisch aufgenommen und abgespeichert werden und die eine vorgebbare Menge von Kenngrößen umfassen (siehe auch Beschreibungseinleitung).

Weiterbildungen der Erfindung ergeben sich auch aus den abhängigen Ansprüchen.

Ausführungsbeispiele der Erfindung werden nachfolgend anhand der Zeichnungen dargestellt und erläutert.

Es zeigen

Fig.1    ein Blockdiagramm, das Schritte eines Verfahrens zur Anpassung mindestens eines Referenzdatensatzes anhand mindestens eines Eingabedatensatzes enthält,
Fig.2    eine Skizze, die unterschiedliche Bereiche in einem Bewertungsraum zur Verifikation einer Unterschrift zeigt,
Fig.3    eine Skizze, die aufbauend auf Fig.2 einen zusätzlichen Bereich innerhalb des Bewertungsraums zeigt.

Nachfolgend wird ein Ausführungsbeispiel, das sich mit der Anwendung "Unterschriftsverifikation" befaßt, dargestellt.

Bevor ein Teilnehmer mittels seiner Unterschrift elektronisch verifiziert werden kann, wird aus einer Reihe von Unterschriften eine Referenzunterschrift (Referenzdatensatz) ermittelt. Dies geschieht durch eines der oben erwähnten Verfahren zur Referenzdatensatzbestimmung. Dabei wird aus mehreren geleisteten Unterschriften, die nachweislich vom Teilnehmer selbst stammen (authentische Unterschriften), eine Referenzunterschrift ermittelt.

Die mittels Referenzdatensatzbestimmung eingangs gefundene Referenzunterschrift basiert auf den Originaldatensätzen, die der Teilnehmer zum Anlegen des Referenzdatensatzes gemacht hat. Diese Originaldatensätze (Unterschriften) sind sich ähnlicher als eine Unterschrift, die zu einem späteren Zeitpunkt von diesem Teilnehmer abgegeben wird. Weiterhin unterliegt eine Unterschrift einer langfristigen Veränderung bedingt durch das Schreibverhalten des Teilnehmers. Demzufolge wird ein authentischer Teilnehmer, wenn sich seine Unterschrift beispielsweise über Jahre verändert hat, mit einer wachsenden Zurückweisungsrate rechnen müssen, bis er schließlich von dem System eines Tages überhaupt nicht mehr als autorisierter Teilnehmer erkannt wird, falls keine wie in dieser Erfindung beschriebene Anpassung an die "natürliche" Veränderung in der Unterschrift des Teilnehmers stattgefunden hat.

Die Lösung besteht, wie oben erwähnt, darin, daß einer schleichenden Veränderung der Unterschrift durch Anpassung der Referenzunterschrift begegnet wird. Dabei entsteht ein Problem der Fälscheradaption, d.h. es muß sichergestellt sein, daß eine Anpassung nicht auf die Eigenheiten einer Unterschrift eines potentiellen Fälschers hin adaptiert wird.

Die Erfindung stellt ein Verfahren zur Adaption der Referenzunterschrift vor, das sicherheitsrelevante Kriterien berücksichtigt und Veränderungen im Unterschriftsverhalten des Originalteilnehmers kompensiert.

FIGUR 1:

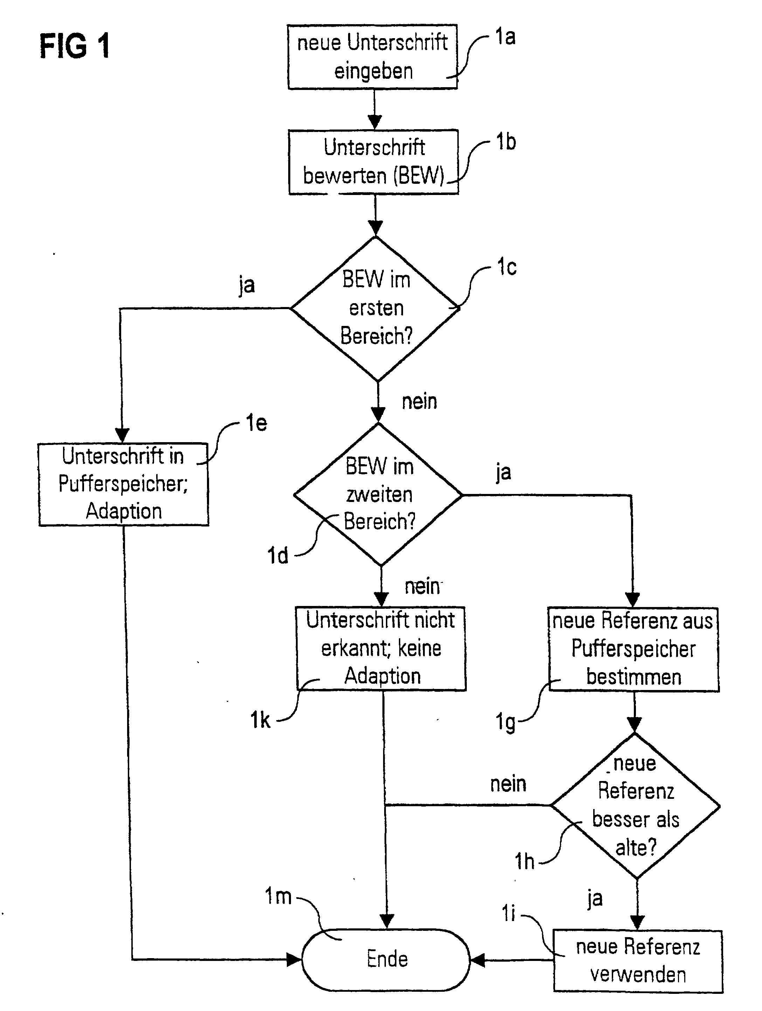

In Fig.1 werden anhand eines Blockdiagramms Schritte des Verfahrens zur Adaption der Referenzunterschrift (Referenzdatensatz) dargestellt. Vorausgesetzt wird, daß, wie oben ausführlich dargelegt ist, eine Referenzunterschrift aus einer Menge von Originaldatensätzen ermittelt wurde (Referenzdatensatzbestimmung).

In einem Schritt la wird ein neuer Eingabedatensatz hinzugefügt, d.h. eine Unterschrift wird geleistet und elektronisch erfaßt. Im Schritt 1b wird die elektronische Unterschrift bewertet. Hierzu wird mittels eines geeigneten Verfahrens ein Abstand zur Referenzunterschrift bestimmt und als ein Bewertungsmaß BEW gespeichert. Liegt das Bewertungsmaß BEW in einem ersten Bereich, nachfolgend als Aktualisierungsbereich bezeichnet, so wird die Unterschrift verifiziert und in einen Pufferspeicher eingetragen.

Der Pufferspeicher ist vorzugsweise ein Ringpuffer, d.h. er verfügt über eine vorgebbare Anzahl an freien Speicherplätzen, wobei, wenn alle Speicherplätze im Ringpuffer belegt sind, mit dem Hinzufügen eines neuen Datensatzes in den Ringpuffer der älteste Datensatz gelöscht wird. Sind nicht alle Speicherplätze des Ringpuffers belegt, so entfällt das Löschen eines Datensatzes, der neue Datensatz wird nur in den Ringpuffer eingefügt.

Im Schritt 1e wird die Unterschrift in den Pufferspeicher eingetragen und der Referenzdatensatz angepaßt. Dabei wird erreicht, daß eine Unterschrift (Eingabedatensatz), die in dem Aktualisierungsbereich, also mit einem vorgebbaren Abstand zu einer Fälschung, liegt, eine Adaption einleitet. "Gute" Unterschriften werden zu einer "natürlichen" Veränderung der Unterschrift des autorisierten Teilnehmers herangezogen. Diese Anpassung der Referenzunterschrift wird nachfolgend näher erläutert:

Generell besteht eine Referenzunterschrift aus vielen Unterschriften, wobei die Referenzunterschrift eine Gewichtung entsprechend der Anzahl der ihr zugrundeliegenden Unterschriften enthält. Wurde eine Referenzunterschrift $U_{ref}$ beispielsweise aus 10 Unterschriften gewonnen und kommt eine weitere Unterschrift U hinzu, so findet eine Anpassung zu einer neuen Referenzunterschrift $U_{ref,neu}$ derart statt, daß gilt:

$$U_{ref,neu} = \frac{10}{11} U_{ref} + \frac{1}{11} U \quad\quad\quad (1).$$

Entscheidend dabei ist die Gewichtung der (alten) Referenzunterschrift, die der Anzahl (hier 10) der ihr zugrundeliegenden Originalunterschriften entspricht. Wird eine weitere Anpassung der neuen Referenzunterschrift $U_{ref,neu}$ in eine weitere Referenzunterschrift $U_{ref,neu}'$ vorgenommen mittels einer weiteren Originalunterschrift U', so gilt analog zu Gleichung (1) :

$$U_{ref,neu}' = \frac{11}{12} U_{ref,neu} + \frac{1}{12} U' \quad\quad\quad (2).$$

So setzt sich die Anpassung immer weiter fort, wobei das Gewicht der neu hinzukommenden Unterschrift $U_i'$ immer weiter abnimmt (vergleiche U mit U'). Abhilfe schafft hier eine Schwelle SW, die eine vorgebbares Mindestgewicht jeder hinzukommenden Unterschrift $U_i'$ gewährleistet :

$$U_{ref,i}' = \frac{SW - 1}{SW} U_{ref,i} + \frac{1}{SW} U_i' \quad\quad\quad (3).$$

Liegt das Bewertungsmaß in einem zweiten Bereich (siehe Schritt 1c), fortan als Referenzbildungsbereich bezeichnet, wird eine nächste Referenzunterschrift gemäß dem Verfahren zur Referenzdatensatzbestimmung gebildet (Schritt 1g), wobei dazu die Datensätze des Pufferspeichers verwendet werden, und dieser nächste Referenzdatensatz mit dem (alten) Referenzdatensatz verglichen (Schritt 1h). Ist der nächste Referenzdatensatz besser als der alte Referenzdatensatz, so wird der nächste Referenzdatensatz verwendet, der (alte) Referenzdatensatz wird verworfen (Schritt 1i).

Ist der nächste Referenzdatensatz nicht besser als der (alte) Referenzdatensatz (Schritt 1h), so wird keine weitere Anpassung vorgenommen. Der (alte) Referenzdatensatz bleibt bestehen.

Liegt das Bewertungsmaß nicht innerhalb des Referenzbildungsbereichs, so wird im Schritt 1k die Unterschrift nicht verifiziert, es findet natürlich auch keinerlei Adaption eines Referenzdatensatzes statt. In diesem Fall wird der Teilnehmer nicht verifiziert, sei es, daß er eine schlechte Unterschrift abgegeben hat, oder sei es, daß es sich um eine Fälschung handelt.

Der Vollständigkeit halber ist in Fig.1 ein Endzustand 1m angegeben, der anzeigt, daß das dargestellte Verfahren dort terminiert. Die verschiedenen Äste im Blockdiagramm von Fig.1 enden alle in diesem Endzustand im.

FIGUR 2:

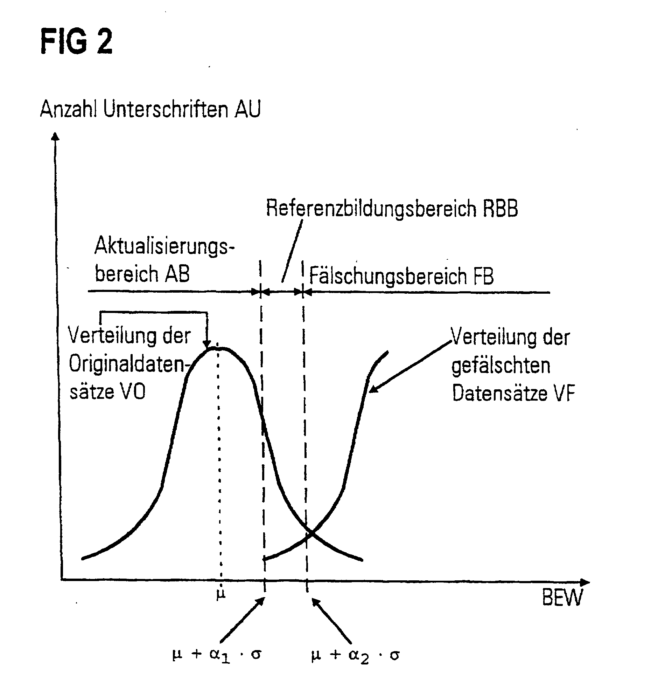

In Fig.2 sind in einem zweidimensionalen Diagramm eine Anzahl der Unterschriften AU auf der Ordinate und das Bewertungsmaß BEW auf der Abszisse angetragen. Die Originaldatensätze sind nach einer Wahrscheinlichkeitsverteilung angenommen (Normalverteilung).

Die Verteilung der Originaldatensätze ist bestimmt durch den Erwartungswert $\mu$. Die oben beschriebenen drei Bereiche werden hier veranschaulicht, wobei gilt:

erster Bereich = Aktualisierungsbereich AB mit

$$BEW \in [0; \mu + \alpha_1 \cdot \sigma],$$

zweiter Bereich = Referenzbildungsbereich RBB mit

$$BEW \in [\mu + \alpha_1 \cdot \sigma; \mu + \alpha_2 \cdot \sigma],$$

dritter Bereich = Fälschungsbereich FB mit

$$BEW \in [\mu + \alpha_2 \cdot \sigma; ...].$$

Im Aktualisierungsbereich AB liegende Eingabedaten führen zu einer Adaption (erneute Referenzdatensatzbestimmung), während bei Eingabedaten aus dem Referenzbildungsbereich zuerst überprüft wird, ob dadurch in die "richtige" Richtung, also hin zu den Originaldatensätzen und nicht zu den Fälschungen adaptiert wird, ehe eine Referenzdatensatzbestimmung initiiert wird.

Der Aktualisierungsbereich AB dient zum Abfangen langsamer Veränderung in der Unterschrift eines autorisierten Teilnehmers, während im Referenzbildungsbereich RBB stärkere Schwankungen (Veränderungen) in der Unterschrift berücksichtigt werden. Da der Pufferspeicher nur Unterschriften aus dem Aktualisierungsbereichs enthält, wird eine Adaption zum Fälscher hin deutlich erschwert.

Die vorgebbaren Parameter $\alpha_1$ und $\alpha_2$ werden derart angegeben, daß zum einen keine Fälschungen in die laufende Adaption gelangen (abhängig von $\alpha_1$) und zum anderen die Gleichfehlerrate zwischen Originalen und Fälschungen möglichst klein wird (abhängig von $\alpha_2$).

FIGUR 3:

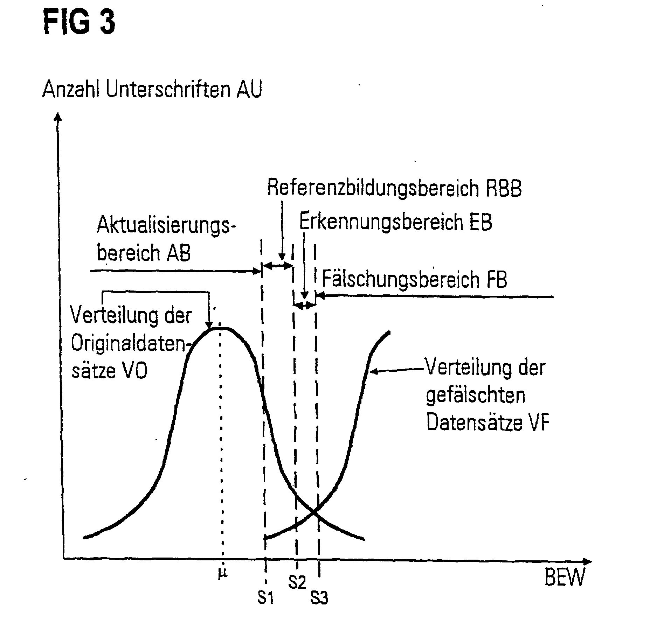

In Fig.3 wird zusätzlich zu Fig.2 und den dort eingeführten Bezeichnungen ein vierter Bereich (Erkennungsbereich EB) dargestellt. Bei Unterschriften, deren Bewertungsmaß in diesem Bereich liegt, handelt es sich noch um Originalunterschriften, es wird aber keine Referenzbildung evaluiert (wie im Referenzbildungsbereich RBB) und auch keine Anpassung (wie im Aktualisierungsbereich AB) vorgenommen. Die Unterschrift wird verifiziert, die vorhandene Referenzunterschrift erfährt keine Veränderung.

Im Rahmen dieses Dokuments wurden folgende Veröffentlichungen zitiert:

[1] Deutsche Patentschrift 195 11 470.1-53

[2] T.K.Worthington, T.J.Chainer, J.D.Williford, S.C.Gunderen: IBM Dynamic Signature Verification, Computer Society, IFIP 1985, S.129-154.

**Patentansprüche**

1. Verfahren zur Anpassung eines Referenzdatensatzes anhand mindestens eines Eingabedatensatzes durch einen Rechner,

   a) bei dem für den (mindestens einen) Eingabedatensatz ein Bewertungsmaß (BEW) bestimmt wird hinsichtlich einer Übereinstimmung mit dem mindestens einen Referenzdatensatz,
   b) bei dem, wenn das Bewertungsmaß (BEW) innerhalb eines vorgegebenen ersten Bereichs (AB) liegt, der Eingabedatensatz in einen Pufferspeicher eingetragen wird und ein neuer Referenzdatensatz ermittelt wird,
   c) bei dem, wenn das Bewertungsmaß (BEW) innerhalb eines vorgegebenen zweiten Bereichs (RBB) liegt, ein nächster Referenzdatensatz aus den Datensätzen aus dem Pufferspeicher ermittelt wird und,
   falls der nächste Referenzdatensatz besser als der (alte) Referenzdatensatz ist, der nächste Referenzdatensatz verwendet und der (alte) Referenzdatensatz verworfen wird,
   ansonsten, falls der nächste Referenzdatensatz schlechter als der (alte) Referenzdatensatz ist, wird der nächste Referenzdatensatz verworfen,
   d) bei dem ansonsten der Referenzdatensatz nicht verändert wird.

2. Verfahren nach Anspruch 1,
   bei dem der Referenzdatensatz bestimmt wird, indem vorgebbare Kenngrößen einer vorgebbaren Anzahl von Datensätzen gemittelt werden.

3. Verfahren nach Anspruch 1,
   bei dem der Datensatz als Referenzdatensatz aus einer vorgebbaren Anzahl Datensätze ausgewählt wird, dessen Kenngrößen die ausgewählten Datensätze am besten beschreiben.

4. Verfahren nach einem der Ansprüche 1 bis 3,
   bei dem der Pufferspeicher ein Ringpuffer mit einer vorgebbaren Anzahl Datensätze ist.

5. Verfahren nach einem der Ansprüche 1 bis 4,
   bei dem der Eingabedatensatz ein Originaldatensatz ist, falls das Bewertungsmaß (BEW) innerhalb des ersten oder zweiten Bereichs liegt, oder eine Fälschung ist, falls das Bewertungsmaß (BEW) außerhalb des ersten oder zweiten Bereichs liegt.

6. Verfahren nach einem der vorhergehenden Ansprüche,
   bei dem Originaldatensätze nach einer Wahrscheinlichkeitsverteilung verteilt sind.

7. Verfahren nach Anspruch 6,
   bei dem die Wahrscheinlichkeitsverteilung eine Normalverteilung mit einem Erwartungswert und einer Standardabweichung ist.

8. Verfahren nach Anspruch 7,
   bei dem der Referenzdatensatz dem Erwartungswert der Originaldatensätze entspricht.

9. Verfahren nach Anspruch 7 oder 8,
   bei dem der erste Bereich bestimmt wird durch das Intervall

$$BEW \in [0; \mu + \alpha_1 \cdot \sigma],$$

wobei

BEW  das Bewertungsmaß,
$\mu$      den Erwartungswert,
$\sigma$      die Standardabweichung,
$\alpha_1$      einen vorgebbarer Parameter, mit dem eine obere Schranke des ersten Bereichs bestimmt wird,

bezeichnen,
und bei dem

der zweite Bereich bestimmt wird durch das Intervall

$$BEW \in [\mu + \alpha_1 \cdot \sigma; \mu + \alpha_2 \cdot \sigma],$$

wobei

$\alpha_2$    einen vorgebbaren Parameter, mit dem eine obere Schranke des zweiten Bereichs bestimmt wird,

bezeichnet,
und bei dem
ein dritter Bereich bestimmt wird durch das Intervall

$$BEW \in [\mu + \alpha_2 \cdot \sigma; \infty],$$

wobei der dritte Bereich die Fälschungen umfaßt.

**10.** Verfahren nach einem der Ansprüche 1 bis 9,
bei dem der Eingabedatensatz, der in einem vierten Bereich zwischen dem zweiten und dem dritten Bereich mit vorgebbaren Schwellwerten liegt, als Originaldatensatz erkannt wird, weiterhin der Referenzdatensatz aber nicht verändert wird.

**11.** Verfahren nach einem der vorhergehenden Ansprüche,
bei dem die Datensätze Unterschriften sind, die elektronisch aufgenommen und abgespeichert werden und die eine vorgebbare Menge von Kenngrößen umfassen.

**Claims**

**1.** Method for adapting a reference data record by computer with the aid of at least one input data record,

a) in which a weighting measure (BEW) is determined for the (at least one) input data record with regard to conformance with the at least one reference data record,
b) in which when the weighting measure (BEW) is within a prescribed first range (AB), the input data record is entered into a buffer memory and a new reference data record is determined,
c) in which when the weighting measure (BEW) is within a prescribed second range (RBB), a next reference data record is determined from the data records from the buffer memory, and

if the next reference data record is better than the (old) reference data record, the next reference data record is used and the (old) reference data record is discarded,
otherwise the next reference data record is discarded if the next reference data record is worse than the (old) reference data record, and

d) in which the reference data record is otherwise not changed.

**2.** Method according to Claim 1, in which the reference data record is determined by averaging prescribable characteristics of a prescribable number of data records.

**3.** Method according to Claim 1, in which the data record is selected as reference data record from a prescribable number of data records whose characteristics best describe the selected data records.

**4.** Method according to one of Claims 1 to 3, in which the buffer memory is a ring buffer with a prescribable number of data records.

**5.** Method according to one of Claims 1 to 4, in which the input data record is an original data record if the weighting measure (BEW) is within the first or second range, or a falsification if the weighting measure (BEW) is outside the first or second range.

6. Method according to one of the preceding claims, in which original data records are distributed according to a probability distribution.

7. Method according to Claim 6, in which the probability distribution is a normal distribution with an expectation and a standard deviation.

8. Method according to Claim 7, in which the reference data record corresponds to the expectation of the original data records.

9. Method according to Claim 7 or 8, in which the first range is determined by the interval

$$BEW \in [0; \mu + \alpha_1 \cdot \sigma],$$

where

BEW  is the weighting measure
$\mu$      is the expectation
$\sigma$      is the standard deviation
$\alpha_1$      is a prescribable parameter with the aid of which an upper bound of the first range is determined, and in which

the second range is determined by the interval

$$BEW \in [\mu + \alpha_1 \cdot \sigma; \mu + \alpha_2 \cdot \sigma],$$

where

$\alpha_2$    denotes a prescribable parameter with the aid of which an upper bound of the second range is determined,

and in which
a third range is determined by the interval

$$BEW \in [\mu + \alpha_2 \cdot \sigma; \infty],$$

the third range comprising the falsifications.

10. Method according to one of Claims 1 to 9, in which the input data record, which is in a fourth range between the second and the third range with prescribable threshold values, is recognized as the original data record, but the reference data record continues to be unchanged.

11. Method according to one of the preceding claims, in which the data records are signatures which are picked up and stored electronically and which comprise a prescribable set of characteristics.

**Revendications**

1. Procédé pour adapter par ordinateur un jeu de données de référence à l'aide d'au moins un jeu de données d'entrée,

   a) au cours duquel on détermine, pour (au moins un ou) le jeu de données d'entrée, une valeur d'évaluation (BEW) qui décrit une concordance avec (au moins un ou) le jeu de données de référence,
   b) au cours duquel, lorsque la valeur d'évaluation (BEW) se trouve à l'intérieur d'une première plage prédéfinie (AB), on inscrit le jeu de données d'entrée dans une mémoire tampon et on détermine un nouveau jeu de données de référence,
   c) au cours duquel, lorsque la valeur d'évaluation (BEW) se trouve à l'intérieur d'une deuxième plage prédéfinie (RBB), on détermine un nouveau jeu de données de référence à partir des jeux de données tirés de la mémoire tampon et,

dans le cas où le nouveau jeu de données de référence est meilleur que le (l'ancien) jeu de données de référence, on utilise le nouveau jeu de données de référence et on rejette le (l'ancien) jeu de données de référence,

sinon, dans le cas où le nouveau jeu de données de référence est plus mauvais que le (l'ancien) jeu de données de référence, on rejette le nouveau jeu de données de référence,

d) au cours duquel, dans le cas contraire, le jeu de données de référence n'est pas modifié.

**2.** Procédé selon la revendication 1,
au cours duquel on détermine le jeu de données de référence en faisant la moyenne de grandeurs caractéristiques, qui peuvent être prédéfinies, d'un nombre, qui peut être prédéfini, de jeux de données.

**3.** Procédé selon la revendication 1,
au cours duquel on choisit le jeu de données, qui sert de jeu de données de référence, parmi un nombre, qui peut être prédéfini, de jeux de données, dont les grandeurs caractéristiques décrivent au mieux les jeux de données choisis.

**4.** Procédé selon l'une des revendications 1 à 3,
dans lequel la mémoire tampon est un tampon à décalage cyclique avec un nombre de jeux de données qui peut être prédéfini.

**5.** Procédé selon l'une des revendications 1 à 4
dans lequel le jeu de données d'entrée est un jeu de données originales, dans le cas où la valeur d'évaluation (BEW) se trouve à l'intérieur de la première ou de la deuxième plage, ou une falsification, dans le cas où la valeur d'évaluation (BEW) se trouve à l'extérieur de la première ou de la première plage.

**6.** Procédé selon l'une des revendications précédentes
dans lequel les jeux de données originales sont répartis suivant une répartition de probabilité.

**7.** Procédé selon la revendication 6
dans lequel la répartition de probabilité est une répartition normale avec une valeur attendue et une déviation standard.

**8.** Procédé selon la revendication 7
dans lequel le jeu de données de référence correspond à la valeur attendue des jeux de données originales.

**9.** Procédé selon la revendication 7 ou 8
dans lequel la première plage est définie par l'intervalle

$$BEW \in [0; \mu + \alpha_1 \cdot \sigma],$$

dans lequel les symboles représentent respectivement

BEW la valeur d'évaluation
$\mu$ la valeur attendue
$\sigma$ la déviation standard
$\alpha_1$ un paramètre, qui peut être prédéterminé, avec lequel on définit une limite supérieure de la première plage,

et dans lequel
la deuxième plage est définie par l'intervalle

$$BEW \in [\mu + \alpha_1 \cdot \sigma; \mu + \alpha_2 \cdot \sigma],$$

dans lequel

$\alpha_2$ représente un paramètre, qui peut être prédéterminé, avec lequel on définit une limite supérieure de la deuxième plage,

et dans lequel
une troisième plage est définie par l'intervalle

$$BEW \in [\mu + \alpha_2 \cdot \sigma; \infty],$$

la troisième plage comprenant les falsifications.

10. Procédé selon une des revendications 1 à 9
au cours duquel le jeu de données d'entrée, qui se trouve dans une quatrième plage entre la deuxième et la troisième plage avec des valeurs de seuil qui peuvent être prédéfinies, est reconnu comme jeu de données originales, le jeu de données de référence n'étant, en outre, pas modifié.

11. Procédé selon l'une des revendications précédentes
dans lequel les jeux de données sont des signatures, qui sont recueillies et mémorisées électroniquement et qui renferment un ensemble, qui peut être prédéfini, de grandeurs caractéristiques.

**FIG 1**

neue Unterschrift eingeben — 1a

Unterschrift bewerten (BEW) — 1b

BEW im ersten Bereich? — 1c

ja

nein

Unterschrift in Pufferspeicher; Adaption — 1e

BEW im zweiten Bereich? — 1d

ja

nein

Unterschrift nicht erkannt; keine Adaption — 1k

neue Referenz aus Pufferspeicher bestimmen — 1g

neue Referenz besser als alte? — 1h

nein

ja

1m

Ende

neue Referenz verwenden — 1i

# FIG 2

Anzahl Unterschriften AU

Referenzbildungsbereich RBB

Aktualisierungsbereich AB

Fälschungsbereich FB

Verteilung der
Originaldatensätze VO

Verteilung der
gefälschten
Datensätze VF

$\mu$

BEW

$\mu + \alpha_1 \cdot \sigma$          $\mu + \alpha_2 \cdot \sigma$

# FIG 3

Anzahl Unterschriften AU

Referenzbildungsbereich RBB

Erkennungsbereich EB

Aktualisierungsbereich AB

Fälschungsbereich FB

Verteilung der
Originaldatensätze VO

Verteilung der
gefälschten
Datensätze VF

μ

S1  S2  S3

BEW